(19) Europäisches Patentamt / European Patent Office / Office européen des brevets

(11) **EP 1 934 453 B1**

(12) **EUROPÄISCHE PATENTSCHRIFT**

(45) Veröffentlichungstag und Bekanntmachung des Hinweises auf die Patenterteilung:
**12.12.2012 Patentblatt 2012/50**

(51) Int Cl.:
*F02D 41/18* (2006.01)     *F02D 41/22* (2006.01)
*F02D 41/00* (2006.01)

(21) Anmeldenummer: 06806900.4

(22) Anmeldetag: **29.09.2006**

(86) Internationale Anmeldenummer:
**PCT/EP2006/066930**

(87) Internationale Veröffentlichungsnummer:
**WO 2007/036576 (05.04.2007 Gazette 2007/14)**

(54) **VERFAHREN UND VORRICHTUNG ZUM BETREIBEN EINER BRENNKRAFTMASCHINE**

METHOD AND APPARATUS FOR OPERATING AN INTERNAL COMBUSTION ENGINE

PROCEDE ET DISPOSITIF PERMETTANT DE FAIRE FONCTIONNER UN MOTEUR A COMBUSTION INTERNE

(84) Benannte Vertragsstaaten:
**DE FR GB**

(30) Priorität: **30.09.2005 DE 102005047446**

(43) Veröffentlichungstag der Anmeldung:
**25.06.2008 Patentblatt 2008/26**

(73) Patentinhaber: **ROBERT BOSCH GMBH**
**70442 Stuttgart (DE)**

(72) Erfinder:
 • **HARTMANN, Dirk**
  **70469 Stuttgart (DE)**
 • **ROTH, Andreas**
  **75417 Muehlacker-lomersheim (DE)**
 • **REUSCHENBACH, Lutz**
  **70469 Stuttgart (DE)**
 • **MALLEBREIN, Georg**
  **70825 Korntal-muenchingen (DE)**
 • **DRUNG, Michael**
  **75417 Muehlacker (DE)**
 • **SCHILLER, Frank**
  **71732 Tamm (DE)**
 • **IDE, Nicolas**
  **73770 Denkendorf (DE)**
 • **DEISSLER, Markus**
  **74172 Neckarsulm (DE)**

(56) Entgegenhaltungen:
EP-A2- 1 247 967     DE-A1- 4 325 902
DE-A1- 10 064 651

**Beschreibung**

Stand der Technik

Die Erfindung geht von einem Verfahren und von einer Vorrichtung zum Betreiben einer Brennkraftmaschine nach der Gattung der unabhängigen Ansprüche aus.

Aus der DE 10064651 A1 ist bereits ein Verfahren und eine Vorrichtung zur Steuerung einer Gasfüllung einer Mehrzahl von Zylindern bei einer Brennkraftmaschine mit variabler Ventilsteuerung bekannt, indem eine Erfassungssignal eines Füllungssensors mit einer Abtastrate abgetastet wird. Ferner wird ein Erfassungsintervall für einen Zylinder bestimmt. Innerhalb dieses Erfassungsintervalls werden die Abtastwerte zur Ermittlung einer Abtastwertsumme aufaddiert. Ferner wird eine Anzahl von Abtastwerten, die innerhalb des ersten Erfassungsintervalls sind, zur Ermittlung eines ersten Zählwerts gezählt. Die in den ersten Zylinder gefüllte Luftmasse wird dann mittels Bildung eines Quotienten aus der Abtastwertsumme und dem Zählwert ermittelt. Bei einem Verhältnis des Saugrohrdrucks zum Umgebungsdruck größer als 0,8 werden Gasfüllungsunterschiede zwischen den Zylindern vorzugsweise mit einem Heiß-Film-Luftmassensensor erfasst. Bei einer stärkeren Androsselung, d. h. bei einem Verhältnis des Saugrohrdrucks zum Umgebungsdruck kleiner als 0,8, ist vorzugsweise das Erfassungssignal des Saugrohrdrucksensors zur Erfassung von Gasfüllungsunterschieden zwischen Zylindern zu verwenden.

Aus der EP 1247 967 A2 ist die Ermittlung des in den oder die Zylinder strömenden Luftmassenstroms bekannt. Dazu wird der Luftmassenstrom in den Zylinder berechnet, indem vom gemessenen Luftmassenstrom im Saugrohr die Änderungen des gemessenen Saugrohrdrucks multipliziert mit einem volumen- und temperaturabhängigen Faktor subtrahiert werden.

In der EP 1 643 101 A1 wird ein System zur Steuerung der Luftmasse einer Brennkraftmaschine beschrieben. Es wird eine zylinderindividuelle Luftmasse berechnet und mit einem Sollwert verglichen.

Die EP 0 399 829 A2 offenbart ein Verfahren zur Erkennung einer Fehlfunktion einer variablen Ventilverstellung einer Brennkraftmaschine. Das Verfahren setzt eine vorbestimmte, der Brennkraftmaschine zuzuführenden Einlassluftmenge fest, erfasst eine Einlassluftmenge, vergleicht die erfasste Einlassluftmenge mit der vorbestimmten Einlassluftmenge und erkennt aus dem Ergebnis des Vergleichs, ob ein Fehler in den Wechselmitteln vorliegt oder nicht.

Vorteile der Erfindung

Das erfindungsgemäße Verfahren und die erfindungsgemäße Vorrichtung zum Betreiben einer Brennkraftmaschine mit den Merkmalen der unabhängigen Ansprüche haben dem gegenüber den Vorteil, dass die charakteristische Größe für die Absaugleistung in Abhängigkeit des in ein Saugrohr der Brennkraftmaschine zuströmenden Massenstroms und einer Änderung des Saugrohrdrucks während einer Ansaugphase des Zylinders ermittelt wird. Auf diese Weise lässt sich für die Ermittlung der charakteristischen Größe für die Absaugleistung des Zylinders ein einheitliches Modell realisieren, das die charakteristische Größe für die Absaugleistung bei allen möglichen Drosselklappenstellungen und bei allen Lasten und Motordrehzahlen der Brennkraftmaschine ermöglicht. Dabei lässt sich die charakteristische Größe für die Absaugleistung exakt auf Basis eines physikalischen Modells des Saugrohrs und eines physikalischen Modells der Abströmung des Gasstroms aus dem Saugrohr in den Zylinder mit vorhandener Füllungssensorik bestimmen.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, wenn der Saugrohrdruck durch Abtastung mit einer ersten vorgegebenen Abtastrate in einem ersten in seiner Länge und Lage vorgegebenen Zeit- oder Kurbelwinkelintervall ermittelt wird. Auf diese Weise lässt sich bei geeigneter Wahl der Länge und Lage des vorgegebenen Zeit- oder Kurbelwinkelintervalls der Saugrohrdruck in Zuordnung zum jeweils ansaugenden Zylinder einfach ermitteln.

Vorteilhaft ist weiterhin, wenn mehrere Werte für den Saugrohrdruck des ersten vorgegebenen Zeit- oder Kurbelwinkelintervalls, insbesondere gewichtet, gemittelt werden. Auf diese Weise reicht es auch aus, aus dem ersten vorgegebenen Zeit- oder Kurbelwinkelintervall Stichproben für den Saugrohrdruck zu entnehmen und aus diesen einen repräsentativen Wert für den Saugrohrdruck im ersten vorgegebenen Zeit- oder Kurbelwinkelintervall zu bilden, wobei im Falle der Gewichtung der Stichproben eine unterschiedliche Bedeutung der Stichproben für den Verlauf des Saugrohrdrucks im ersten vorgegebenen Zeit- oder Kurbelwinkelintervall besonders einfach berücksichtigt werden kann.

Ein weiterer Vorteil ergibt sich, wenn der in das Saugrohr zuströmende Massenstrom, vorzugsweise durch Abtastung mit einer zweiten vorgegebenen Abtastrate, in einem zweiten in seiner Länge und Lage vorgegebenen Zeit- oder Kurbelwinkelintervall ermittelt wird. Auf diese Weise lässt sich der in das Saugrohr zuströmende Massenstrom bei geeigneter Wahl des zweiten in seiner Länge und Lage vorgegebenen Zeit- oder Kurbelwinkelintervalls besonders einfach und zuverlässig in Zuordnung zum jeweils gerade ansaugenden Zylinder ermitteln.

Entsprechendes gilt für den Fall, dass der in das Saugrohr zuströmende Massenstrom in einem vorgegebenen Rechenraster in einem zweiten in seiner Länge und Lage vorgegebenen Zeit- oder Kurbelwinkelintervall aus Betriebskenngrößen der Brennkraftmaschine modelliert bzw. berechnet wird.

Vorteilhaft ist weiterhin, wenn mehrere Werte für den Massenstrom des zweiten vorgegebenen Zeit- oder Kurbelwinkelintervalls, insbesondere gewichtet, gemittelt werden. Auf diese Weise reicht es aus, aus dem zweiten vorgegebenen Zeit- oder Kurbelwinkelintervall einzelne Stichproben für den Massenstrom zu entnehmen, die für den Verlauf des Massenstroms im zweiten vorgegebenen Zeit- oder Kurbelwinkelintervall repräsentativ sind. Im Falle einer.unterschiedlichen Bedeutung der einzelnen Stichproben für den Verlauf des Massenstroms im zweiten vorgegebenen Zeit- oder Kurbelwinkelintervall können diese Stichproben auch gewichtet gemittelt werden.

Ein weiterer Vorteil ergibt sich, wenn das zweite Zeit- oder Kurbelwinkelintervall um einen vorgegebenen Zeit- oder Kurbelwinkelabstand gegenüber dem ersten Zeit- oder Kurbelwinkelintervall, vorzugsweise um einen halben Zündabstand zweier direkt aufeinander folgend gezündeter Zylinder der Brennkraftmaschine, versetzt angeordnet wird, insbesondere zeitlich zumindest teilweise vor dem ersten Zeit- oder Kurbelwinkelintervall. Auf diese Weise lässt sich der physikalische Zusammenhang zwischen dem in das Saugrohr zuströmenden Massenstrom und dem dort gebildeten Saugrohrdruck für den jeweils gerade ansaugenden Zylinder optimal für die Ermittlung der charakteristischen Größe für die Absaugleistung des Zylinders berücksichtigen.

Ein weiterer Vorteil ergibt sich, wenn ein sich für die charakteristische Größe ergebender Wert mit einem Sollwert verglichen wird und wenn in Abhängigkeit des Vergleichsergebnisses die Funktion der Absaugung des Zylinders diagnostiziert wird. Auf diese Weise lässt sich mit Hilfe der charakteristischen Größe für die Absaugleistung des Zylinders besonders einfach prüfen, ob die Absaugung des Zylinders fehlerfrei ist oder nicht.

Ein weiterer Vorteil ergibt sich, wenn die charakteristische Größe für die Absaugleistung einem Sollwert nachgerührt wird, insbesondere durch Ansteuerung mindestens eines Gaswechselventils des Zylinders. Auf diese Weise lässt sich besonders einfach eine zylinderindividuelle Füllungsregelung realisieren.

Ein weiterer Vorteil ergibt sich, wenn die charakteristische Größe für die Absaugleistung für mehrere Zylinder ermittelt wird und wenn sich für die charakteristische Größe ergebende Werte mehrerer Zylinder miteinander verglichen werden und wenn in Abhängigkeit des Vergleichsergebnisses die Funktion der Absaugung der Zylinder diagnostiziert wird. Auf diese Weise können auch die Unterschiede der Absaugleistung verschiedener Zylinder der Brennkraftmaschine erkannt und eine zugrunde liegende Fehlfunktion der Ventilsteuerung diagnostiziert werden.

Eine besonders einfache Ermittlung der charakteristischen Größe für die Absaugleistung ergibt sich, wenn als eine erste charakteristische Größe für die Absaugleistung eine in den Zylinder abfließende Füllung gewählt wird, die als Summe einer in das Saugrohr zufließenden Füllung des letzten zweiten vorgegebenen Zeit- oder Kurbelwinkelintervalls und dem Quotienten aus der Differenz der Saugrohrdrücke der letzten beiden ersten vorgegebenen Zeit- oder Kurbelwinkelintervalle und einer Konstanten ermittelt wird. Auf diese Weise lässt sich die erste charakteristische Größe für die Absaugleistung besonders einfach und zuverlässig mit Hilfe vorhandener Füllungssensorik ermitteln.

Darauf aufbauend kann eine zweite charakteristische Größe für die Absaugleistung als Quotient aus der ersten charakteristischen Größe und einer Differenz aus dem Saugrohrdruck und einem vom Restgas im Zylinder abhängigen Partialdruck des letzten ersten Zeit- oder Kurbelwinkelintervalls ermittelt werden. Auf diese Weise ist die zweite charakteristische Größe für die Absaugleistung unabhängig vom Saugrohrdruck. Somit ergibt sich für den Zylinder der Brennkraftmaschine eine multiplikative Größe, die die Absaugleistung charakterisiert.

Ein weiterer Vorteil ergibt sich, wenn eine dritte charakteristische Größe für die Absaugleistung als Quotient aus der zweiten charakteristischen Größe und einem Erwartungswert gebildet wird. Auf diese Weise ergibt sich wiederum eine multiplikative Größe, die die Absaugleistung des Zylinders charakterisiert und die zudem auch noch unabhängig von der Temperatur der Ansaugluft und der Stellung der Einlassnockenwelle ist.

Ein weiterer Vorteil ergibt sich, wenn der Saugrohrdruck durch Integration der Differenz aus einer in das Saugrohr zufließenden Füllung und einer in den Zylinder abfließenden Füllung modelliert wird, wenn der so modellierte Saugrohrdruck mit einem gemessenen Saugrohrdruck verglichen wird und wenn die verwendete charakteristische Größe für die Absaugleistung mit Hilfe eines Ladungswechselmodells zur Bestimmung der in den Zylinder abfließenden Füllung in Abhängigkeit des modellierten Saugrohrdrucks so gewählt wird, dass der modellierte Saugrohrdruck dem gemessenen Saugrohrdruck angeglichen wird. Auf diese Weise lässt sich eine Adaption der charakteristischen Größe für die Absaugleistung des Zylinders realisieren.

Zeichnung

Ein Ausführungsbeispiel der Erfindung ist in der Zeichnung dargestellt und in der nachfolgenden Beschreibung näher erläutert. Es zeigen:

Figur 1        ein Blockschaltbild einer Brennkraftmaschine,

Figur 2 a)      ein Diagramm eines Ventilhubs über dem Kurbelwinkel,

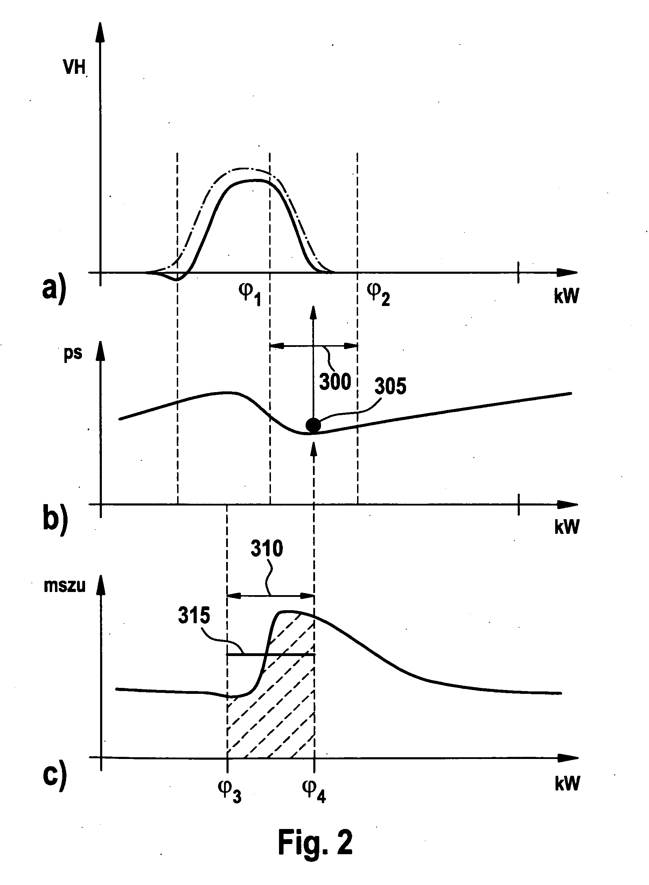

Figur 2 b)    ein Diagramm eines Saugrohrdrucks über dem Kurbelwinkel,

Figur 2 c)    ein Diagramm eines in das Saugrohr zufließenden Massenstroms über dem Kurbelwinkel,

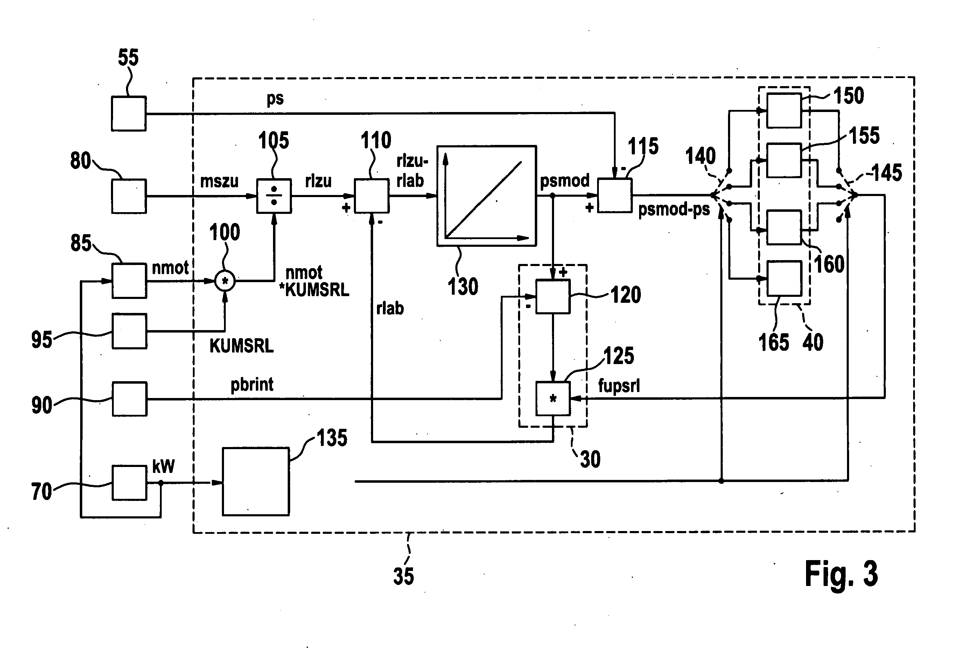

Figur 3    ein Funktionsdiagramm zur Erläuterung der erfindungsgemäßen Vorrichtung und des erfindungsgemäßen Verfahrens und

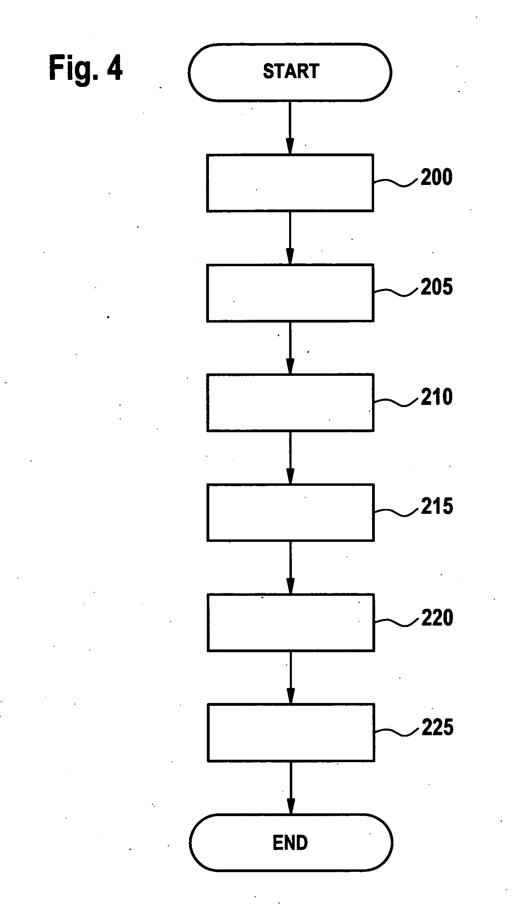

Figur 4    einen Ablaufplan für einen beispielhaften Ablauf des erfindungsgemäßen Verfahrens.

Beschreibung des Ausführungsbeispiels

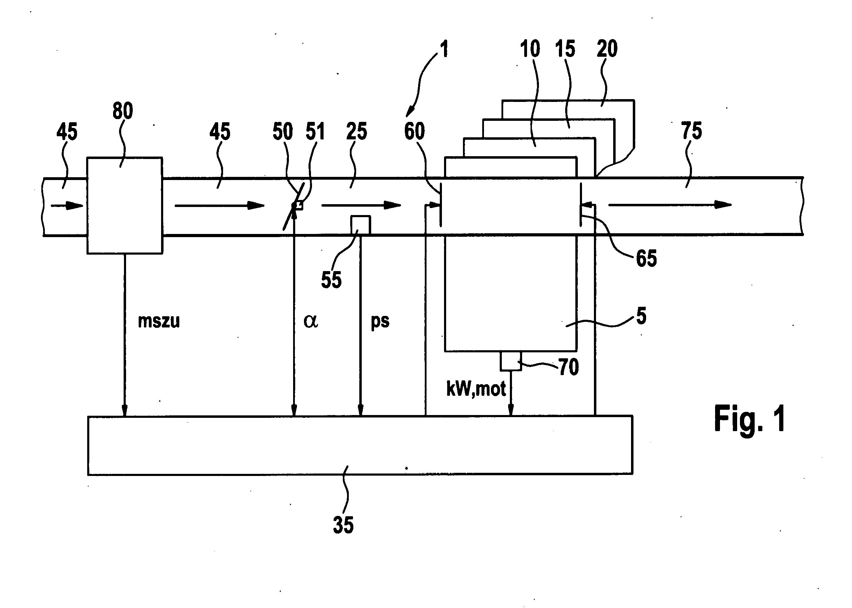

In Figur 1 kennzeichnet 1 eine Brennkraftmaschine, die beispielsweise als Ottomotor ausgebildet ist. Die Brennkraftmaschine 1 treibt beispielsweise ein Kraftfahrzeug an. Sie umfasst im Beispiel nach Figur 1 vier Zylinder 5, 10, 15, 20, von denen exemplarisch ein erster Zylinder 5 dargestellt ist. Dem ersten Zylinder 5 wird über eine Luftzufuhr 45, die stromab einer Drosselklappe 50 in der Luftzufuhr 45 in ein Saugrohr 25 übergeht, sowie über ein Einlassventil 60 Luft zugeführt. Ferner wird Kraftstoff in nicht dargestellter Weise in das Saugrohr 25 oder direkt in den Zylinder 5 eingespritzt. Das sich im Zylinder 5 befindliche Luft-/Kraftstoffgemisch wird über eine in Figur 1 ebenfalls nicht dargestellte Zündkerze gezündet. Durch den daraufhin erfolgenden Verbrennungsvorgang wird ein in Figur 1 nicht dargestellter Kolben des ersten Zylinders 5 angetrieben, der wiederum eine Kurbelwelle der Brennkraftmaschine 1 antreibt. Das bei der Verbrennung des Luft-/Kraftstoffgemisches entstandene Abgas wird über ein Auslassventil 65 des ersten Zylinders 5 in einen Abgasstrang 75 der Brennkraftmaschine 1 ausgestoßen. Die Öffnungs- und Schließzeitpunkte des Einlassventils 60 und des Auslassventils 65 werden entweder über eine gemeinsame Nockenwelle oder eine separate Einlassnockenwelle und eine separate Auslassnockenwelle oder wie in Figur 1 dargestellt mittels einer variablen Ventilsteuerung direkt von einer Motorsteuerung 35 angesteuert. Ein im Bereich der Zylinder 5, 10, 15, 20 angeordneter Kurbelwinkelsensor 70 ermittelt den aktuellen Kurbelwinkel der Brennkraftmaschine 1 und leitet ihn an die Motorsteuerung 35 weiter. Im Saugrohr 25 stromab der Drosselklappe 50 ist ein Saugrohrdrucksensor 55 angeordnet, der den aktuellen Wert des Saugrohrdrucks misst und an die Motorsteuerung 35 weiter leitet. Die Drosselklappe 50 wird in ihrer Position, beispielsweise abhängig von einem Fahrerwunsch oder einem externen Steuersystem, wie beispielsweise einer Antriebsschlupfregelung, einem Antiblockiersystem, einem Fahrgeschwindigkeitsregler, einer Fahrdynamikregelung oder dergleichen in dem Fachmann bekannter Weise von der Motorsteuerung 35 angesteuert und gibt an die Motorsteuerung 35 eine Lagerückmeldung über die aktuelle Position der Drosselklappe 50 beispielsweise mit Hilfe eines Potentiometers zurück. In der Luftzufuhr 45 ist ein Luftmassenmesser 80, beispielsweise in Form eines Heiß-Film-Luftmassenmessers angeordnet, der den dem Saugrohr 25 zufließenden Luftmassenstrom mszu misst und den Messwert an die Motorsteuerung 35 weiter leitet: Der von der Drosselklappe 50 zurück gemeldete Positionswert liegt beispielsweise in Form des Drosselklappenwinkels $\alpha$ vor. Der vom Saugrohrdrucksensor 55 ermittelte Saugrohrdruck ist in Figur 1 mit ps gekennzeichnet. Der vom Kurbelwinkelsensor 70 gelieferte Kurbelwinkelwert ist in Figur 1 mit KW, die daraus durch Differentiation abgeleitete Motordrehzahl mit nmot dargestellt. Die Funktionsweise der weiteren Zylinder 10, 15, 20 erfolgt in entsprechend zum ersten Zylinder 5 beschriebenen Weise.

Das im Folgenden beschriebene Verfahren und die im Folgenden beschriebene Vorrichtung ermöglichen die Ermittlung einer charakteristischen Größe für die Absaugleistung der einzelnen, an das gemeinsame Saugrohr 25 angeschlossenen Zylinder 5, 10, 15, 20. Unter Absaugleistung wird hier eine für den Ladungswechsel typische Größe verstanden, die charakteristisch für die im Ansaugtakt des jeweiligen Zylinders 5, 10, 15, 20 abgesaugte Frischgas- oder Luftmasse ist. Die Absaugleistung wird dabei durch folgende Größen beeinflusst:

- das Hubvolumen des jeweiligen Zylinders 5, 10, 15, 20
- die Temperatur des in den jeweiligen Zylinder 5, 10, 15, 20 einströmenden Gases
- die Phasenlage und der Hub der Ventilerhebungskurve des oder der Einlassventile des jeweiligen Zylinders 5, 10, 15, 20 und
- die Dichtheit des Brennraums des jeweiligen Zylinders 5, 10, 15, 20, insbesondere im Hinblick auf die Einlass- und Auslassventile sowie die Kolbenringe.

Auch die im jeweiligen Zylinder 5, 10, 15, 20 befindliche Restgasmasse, die beispielsweise durch den Partialdruck pbrint des Restgases charakterisiert ist, beeinflusst die Absaugleistung. Um jedoch für jeden Zylinder 5, 10, 15, 20 nur einen Faktor und nicht noch einen Offset detektieren zu müssen, wird in diesem Beispiel die Restgasmasse und damit der Partialdruck pbrint des Restgases fest vorgegeben.

Für Brennkraftmaschinen mit mehr als einem Zylinder ist insbesondere die Ermittlung von zylinderindividuell unterschiedlicher Absaugleistung interessant. Dies wird unter anderem auch zur Diagnose von Ventilsteuersystemen benötigt, die den Hub von Einlassventilen schalten oder sogar ganze Zylinder abschalten. Sofern die Brennkraftmaschine 1 über einen geeigneten stetigen Stellmechanismus zur zylinderindividuellen Beeinflussung der Absaugleistung verfügt, insbesondere zur zylinderindividuellen Ansteuerung der Einlass- und Auslassventile, kann mit Hilfe der Ermittlung der charakteristischen Größe für die Absaugleistung des jeweiligen Zylinders 5, 10, 15, 20 auch eine zylinderindividuelle Füllungsregelung realisiert werden.

Dazu wird erfindungsgemäß die charakteristische Größe für die Absaugleistung des jeweiligen Zylinders 5, 10, 15, 20 abhängig von dem in das Saugrohr 25 strömenden Gasmassenstrom und dem Verlauf des Saugrohrdrucks im gemeinsamen Saugrohr 25 ermittelt. Dabei soll eine Zuordnung der einzelnen Zylinder 5, 10, 15, 20 zu den ermittelten charakteristischen Werten für die Absaugleistung möglich sein.

Erfindungsgemäß kommt ein Saugrohrmodell und ein Ladungswechselmodell zur Bestimmung des charakteristischen Werts für die Absaugleistung und insbesondere ihrer zylinderindividuellen Unterschiede unter Verwendung der vorhandenen beschriebenen Füllungssensorik, nämlich des Luftmassenmessers 80 und des Saugrohrdrucksensors 55 zum Einsatz. Für das erfindungsgemäße Verfahren und die erfindungsgemäße Vorrichtung wird die Verwendung des Saugrohrdrucksensors 55 vorausgesetzt. Das Luftmassenmesser 80 ist vorteilhafter Weise vorgesehen, seine Existenz ist jedoch nicht zwingend. Alternativ zum Hauptlastsignal mszu des Luftmassenmessers 80 in Form des zum Saugrohr 25 zuströmenden Luftmassenstroms kann auch als Nebenlastsignal das Signal $\alpha$ des in diesem Beispiel als Potentiometer ausgebildeten Drosselklappenwinkelsensors ausgewertet werden, der in Figur 1 mit dem Bezugszeichen 51 dargestellt ist. Dabei wird der dem Saugrohr 25 zugeführte Luftmassenstrom mszu aus dem Drosselklappenwinkel $\alpha$ und weiterer Betriebskenngrößen der Brennkraftmaschine 1, wie beispielsweise der Temperatur T stromauf der Drosselklappe 50 und dem Druckverhältnis über der Drosselklappe 50 in dem Fachmann bekannter Weise berechnet. Das Druckverhältnis über der Drosselklappe 50 ergibt sich dabei zu ps/pu, wobei pu der Umgebungsdruck ist. Die entsprechenden Betriebsgrößen T, pu können dabei entweder durch geeignete Sensorik in in Figur 1 nicht dargestellter Weise erfasst oder in dem Fachmann bekannter Weise aus anderen Betriebskenngrößen der Brennkraftmaschine 1 modelliert werden.

So kann beispielsweise ein Ansauglufttemperatursensor in der Luftzufuhr 45 stromauf der Drosselklappe 50 zur Ermittlung der Gastemperatur stromauf der Drosselklappe 50 vorgesehen sein. Weiterhin kann beispielsweise ein Umgebungsdrucksensor ebenfalls stromauf der Drosselklappe 50 zur Ermittlung des Umgebungsdruckes in der Luftzufuhr 45 vorgesehen sein.

Die gemessene Ansauglufttemperatur wird dabei der Motorsteuerung 35 zugeführt. Der gemessene Umgebungsdruck wird ebenfalls der Motorsteuerung 35 zugeführt. Die Motorsteuerung 35 ermittelt dann aus dem Drosselklappenwinkel $\alpha$, dem Druckverhältnis ps/pu über der Drosselklappe 50 und der Gastemperatur T stromauf der Drosselklappe 50 in dem Fachmann bekannter Weise und wie beschreiben den dem Saugrohr 25 zugeführten Luft- bzw. Gasmassenstrom mszu.

Der Saugrohrdruck wird vom Saugrohrdrucksensor 55 mit einer ersten vorgegebenen Abtastrate in einem ersten in seiner Länge und Lage vorgegebenen Zeit- oder Kurbelwinkelintervall abgetastet. Anschließend erfolgt eine Transformation der abgetasteten Saugrohrdruckwerte in ein drehzahlsynchrones Rechenraster. Die Transformation geschieht dadurch, dass die abgetasteten Saugrohrdruckwerte über das in seiner relativen Lage und Länge vorgegebene Zeit- oder Kurbelwinkelintervall gemittelt werden. Die Mittelung geschieht vorzugsweise durch Aufsummierung der abgetasteten Saugrohrdruckwerte in einem zeitlich vorgegebenen Raster, beispielsweise 1 ms, und durch Teilen der so gebildeten Summe durch die Anzahl der Raster pro ersten vorgegebenen Zeit- oder Kurbelwinkelintervall. Der Zusammenhang zwischen Zeit- und zugeordnetem Kurbelwinkelintervall wird über die aktuelle Motordrehzahl nmot in dem Fachmann bekannter Weise hergestellt. Die Mittelung geschieht alternativ durch Aufsummierung lediglich einzelner. Stichproben an beliebiger Stelle des ersten vorgegebenen Zeit- oder Kurbelwinkelintervalls und durch Teilen der gebildeten Summe durch die Anzahl der genommenen Stichproben. Dabei können die Stichproben an solchen Stellen des ersten vorgegebenen Zeit- oder Kurbelwinkelintervalls genommen werden, die als für besonders repräsentativ für den zeitlichen Verlauf des Saugrohrdrucks im ersten vorgegebenen Zeit- oder Kurbelwinkelintervall gelten. Um eine unterschiedliche Bedeutung einzelner Stichproben bei der Mittelung zu berücksichtigen, können diese auch gewichtet in den zu bildenden Mittelwert für den Saugrohrdruck im zugeordneten ersten vorgegebenen Zeit- oder Kurbelwinkelintervall eingehen.

In entsprechender Weise kann auch der in das Saugrohr 25 zuströmende Massenstrom mszu vom Luftmassenmesser 80 durch Abtastung mit einer zweiten vorgegebenen Abtastrate in einem zweiten in seiner Länge und Lage vorgegebenen Zeit- oder Kurbelwinkelintervall ermittelt werden. Dabei kann die zweite vorgegebene Abtastrate in vorteilhafter Weise der ersten vorgegebenen Abtastrate entsprechend gewählt werden. Die erste vorgegebene Abtastrate kann aber auch unterschiedlich von der zweiten vorgegebenen Abtastrate gewählt werden. Alternativ wird der in das Saugrohr 26 zuströmende Massenstrom in einem vorgegebenen Rechenraster, beispielsweise in Rastern von 1ms im zweiten in seiner Länge und Lage vorgegebenen Zeit- oder Kurbelwinkelintervall aus den Betriebskenngrößen des Drosselklappenwinkels $\alpha$, der Temperatur T stromauf der Drosselklappe 50 und dem Druckverhältnis ps/pu über der Drosselklappe 50 in der beschriebenen Weise modelliert bzw. berechnet. Unabhängig von der Art der Bestimmung des in das Saugrohr 25 zuströmenden Massenstroms mszu aus Hauptlastsignal oder Nebenlastsignal erfolgt dann die Transformation der Abtast- oder Rechenwerte für den in das Saugrohr 25 zuströmenden Massenstrom mszu in ein drehzahlsynchrones Rechenraster wie beschrieben dadurch, dass die Abtast- oder Rechenwerte für den Luftmassenstrom mszu über das zweite vorgegebenen Zeit- oder Kurbelwinkelintervall gemittelt werden. Diese Mittelung geschieht wiederum durch Aufsummierung der Messwerte in dem beschriebenen Rechenraster von beispielsweise 1ms und durch Teilen der gebildeten Summe durch die Anzahl der Rechenraster pro zweitem vorgegebenen Zeit- oder Kurbelwinkelintervall. Alternativ können wiederum einzelne Stichproben an beliebigen Stellen des zweiten vorgegebenen Zeit- oder Kurbelwinkelintervalls für den in das Saugrohr 25 zuströmenden Luftmassenstrom mszu ermittelt und aufaddiert werden, um anschließend durch Teilen durch die Anzahl der Stichproben einen Mittelwert zu bilden. Dabei können die Stichproben vorteilhafter Weise besonders an Stellen des zweiten vorgegebenen Zeit- oder Kurbelwinkelintervalls gebildet werden, die von größerer Bedeutung für den Verlauf des Luftmassenstroms mszu im zweiten vorgegebenen Zeit- oder Kurbelwinkelintervall sind, wobei je nach Bedeutung der ausgewählten Stellen für die Entnahme der Stichproben diese auch unterschiedlich gewichtet in den Mittelwert eingehen können.

Bei einem Vier-Takt-Motor wird als Anhaltswert für die Länge des ersten oder des zweiten vorgegebenen Kurbelwinkelintervalls ein Wert gewählt, der mit folgender Gleichung beschrieben werden kann:

$$Phi\_Länge = 720°KW \ / \ Zylinderzahl \tag{1}$$

Dabei entspricht Phi_Länge der Länge des ersten oder zweiten vorgegebenen Kurbelwinkelintervalls, KW bedeutet Kurbelwinkel und die Zylinderzahl ist die Anzahl der Zylinder der Brennkraftmaschine 1, im vorliegenden Beispiel ist die Zylinderzahl = 4.

Es können aber auch kürzere oder längere erste oder zweite vorgegebene Kurbelwinkelintervalle gewählt werden.

Gemäß Gleichung (1) werden die ersten oder zweiten vorgegebenen Kurbelwinkelintervalle mit zunehmender Zylinderzahl kleiner. Wichtig ist, dass das erste und das zweite vorgegebene Kurbelwinkelintervall der Ansaugphase des für die Ermittlung des charakteristischen Werts für die Absaugleistung betrachteten Zylinders zugeordnet werden kann.

Für die Saugrohrdruckerfassung gilt, dass die Phasenlage des ersten vorgegebenen Kurbelwinkelintervalls in Abhängigkeit von der Einbaulage des Saugrohrdrucksensors 55 im Saugrohr 25 und vor allem in Abhängigkeit von der Motordrehzahl nmot und anderen Parametern wie beispielsweise dem Mittelwert des Saugrohrdrucks ps angepasst werden kann. Dabei hat es sich für die Mittelung des Saugrohrdrucks ps als ein günstiger Wert erwiesen, wenn das erste vorgegebene Kurbelwinkelintervall etwa mittig um den Zeitpunkt "Einlass schließt" des entsprechenden Zylinders liegt. Dieser Sachverhalt ist in Figur 2a) und Figur 2b) dargestellt. Figur 2a) zeigt den Verlauf des Ventilhubs VH des Einlassventils eines der Zylinder 5, 10, 15, 20 der Brennkraftmaschine 1 über dem Kurbelwinkel KW. Strich-punktiert ist dabei der Verlauf des Ventilhubs dargestellt, dem zum Vergleich mit durchgezogener Linie der Verlauf des Luftmassenstroms zu dem entsprechenden Zylinder überlagert dargestellt ist. Etwa bei dem Kurbelwinkel KW, zu dem der Ventilhub VH und mit ihm der zu dem entsprechenden Zylinder fließende Massenstrom ausgehend von seinem Maximalwert wieder den Wert 0 erreicht, wird die Mitte des ersten vorgegebenen Kurbelwinkelintervalls 300 gelegt. Dieses beginnt bei einem ersten Kurbelwinkel $\varphi 1$ vor "Einlass schließt" und endet bei einem zweiten Kurbelwinkel $\varphi 2$ nach "Einlass schließt". Gemäß dem Verlauf des Saugrohrdrucks ps über dem Kurbelwinkel KW nach Figur 2b) entspricht der Wert des Saugrohrdrucks ps in der Mitte des ersten vorgegebenen Kurbelwinkelintervalls etwa dem Mittelwert des Verlaufs des Saugrohrdrucks ps über dem Kurbelwinkel KW im ersten vorgegebenen Kurbelwinkelintervall.

Der Mittelwert des Saugrohrdrucks ps im ersten vorgegebenen Kurbelwinkelintervall 300 ist in Figur 2b) mit dem Bezugzeichen 305 gekennzeichnet.

Für die Massenstromerfassung gilt, dass das zweite vorgegebene Kurbelwinkelintervall für die Mittelung des Luftmassenstroms mszu in seiner Länge und Phase vom ersten vorgegebenen Kurbelwinkelintervall zur Mittelung des Saugrohrdrucks ps abweichen kann. Da im ersten vorgegebenen Kurbelwinkelintervall die Absaugung von Gas aus dem Saugrohr 25 erfasst wird, sollte die Mittelung des Luftmassenstroms mszu idealerweise in einem um einen vorgegebenen Kurbelwinkelabstand gegenüber dem ersten vorgegebenen Kurbelwinkelintervall versetzt angeordneten zweiten vorgegebenen Kurbelwinkelintervall erfolgen. Vorteilhafter Weise ist dabei das zweite vorgegebene Kurbelwinkelintervall gegenüber dem ersten vorgegebenen Kurbelwinkelintervall nach früh verschoben, vorzugsweise um einen halben Zündabstand zweier direkt aufeinander folgend gezündeter Zylinder. Dabei können das erste vorgegebene Kurbelwinkelintervall und das zweite vorgegebene Kurbelwinkelintervall auch einander überlappen oder alternativ keine gemeinsame Schnittmenge aufweisen.

Durch eine solche Phasenverschiebung der vorgegebenen Kurbelwinkelintervalle für die Mittelung über den Saugrohrdruck ps und den Luftmassenstrom mszu wird berücksichtigt, dass der Luftmassenstrom mszu in das Saugrohr 25 während des zweiten vorgegebenen Kurbelwinkelintervalls als Endwert den ermittelten und insbesondere gemittelten Saugrohrdruck im ersten vorgegebenen Kurbelwinkelintervall ergibt. Die so in der Ansaugphase des entsprechenden Zylinders über die entsprechenden Kurbelwinkelintervalle gemittelten Signale von Saugrohrdruck ps und Luftmassenstrom mszu sind klar diesem Zylinder zuzuordnen.

In Figur 2c) ist der in das Saugrohr zufließende Luftmassenstrom mszu über dem Kurbelwinkel KW dargestellt. Dabei ist das zweite vorgegebene Kurbelwinkelintervall 310 von einem dritten Kurbelwinkel $\varphi 3$ bis zu einem vierten Kurbelwinkel $\varphi 4$ um den beschriebenen halben Zündabstand gegenüber dem ersten vorgegebenen Kurbelwinkelintervall 300 nach früh verschoben und überlappt mit dem ersten vorgegebenen Kurbelwinkelintervall 300. Somit deckt das zweite vorgegebene Kurbelwinkelintervall 310 den Verlauf des Ventilhubs VH bei maximalem Ventilhub ab, bei dem die größte Ansaugleistung des zugeordneten ansaugenden Zylinders vorliegt, sodass im zweiten vorgegebenen Kurbelwinkelintervall 310 ein starker Anstieg des Luftmassenstroms mszu über dem Kurbelwinkel KW zu verzeichnen ist und dessen Mittelwert über dem zweiten vorgegebenen Kurbelwinkelintervall 310 mit dem Bezugszeichen 315 gekennzeichnet ist.

Gemäß Figur 2c) ist das zweite vorgegebene Kurbelwinkelintervall 310 so gewählt, dass der vierte Kurbelwinkel $\varphi 4$ etwa in der Mittel des ersten vorgegebenen Kurbelwinkelintervalls 300 liegt. Bei der Wahl der beiden vorgegebenen Kurbelwinkelintervalle 300, 310 liegt die Annahme zugrunde, dass zwischen dem dritten Kurbelwinkel $\varphi 3$ und dem zweiten Kurbelwinkel $\varphi 2$ nur der der Ventilerhebungskurve gemäß Figur 2a) zugeordnete Zylinder absaugt, die übrigen Zylinder der Brennkraftmaschine jedoch nicht absaugen.

Jetzt kann die Differentialgleichung des Saugrohrs 25 folgendermaßen aufgestellt werden:

$$ps = \frac{\int (mszu - msab) \cdot dt}{Volumen_{Saugrohr} \cdot Dichte_{Gas}} \qquad (2)$$

Gleichung (2) stellt somit das Saugrohrmodell dar. Für die Umsetzung dieser IntegralGleichung (2) in der Motorsteuerung 35 kann diese durch eine einfache Rechenvorschrift in einem synchronen Rechenraster realisiert werden. Die Berechnung in einem synchronen Rechenraster, d. h. einmal pro Ansaugung eines Zylinders, bedingt, dass nicht mit Massenströmen, sondern mit Füllungen gerechnet wird rlab bezeichnet die Frischluftfüllung im Brennraum des betrachteten Zylinders, die sich während der Ansaugphase des Zylinders ergibt, wenn der Luftmassenstrom msab in den Brennraum des betrachteten Zylinders strömt, msab in Gleichung (2) ist somit der Luftmassenstrom, der in den Brennraum des Zylinders während seiner Ansaugphase strömt. Volumen$_{Saugrohr}$ ist das Volumen des Saugrohrs 25 und Dichte$_{Gas}$ ist die Dichte des sich im Saugrohr befindlichen Frischgases. rlzu wiederum ist die Frischluftfüllung, die während der Ansaugphase des betrachteten Zylinders in das Saugrohr 25 gelangt, wenn der Luftmassenstrom mszu dem Saugrohr 25 zuströmt. rlzu ist eine normierte Füllung, die Werte zwischen 0 und 100 % annimmt und sich durch folgende Gleichung ergibt:

$$rlzu = \frac{mszu \cdot}{nmot \cdot KUMSRL} \qquad (3)$$

In Gleichung (3) ist KUMSRL eine zylinderzahl- und hubraumabhängige Konstante für die Umrechnung zwischen Massenstrom und Füllung und kann in dem Fachmann bekannter Weise beispielsweise auf einem Prüfstand appliziert werden oder aus dem Hubraum und der Zylinderzahl des Motors berechnet werden.

Die Integralgleichung (2) des Saugrohrs 25 kann nun als Summengleichung mit Füllungen im synchronen Rechenraster geschrieben werden:

$$ps(n) = ps(n-1) + K_{saug} \cdot [rlzu(n) - rlab(n)] \qquad (4)$$

Gleichung (4) bedeutet, dass sich der für das Rechenraster n ermittelte Saugrohrdruck ps(n) aus dem für das Rechenraster n-1 ermittelten Saugrohrdruck ps(n-1) zuzüglich der Differenz der in das Saugrohr 25 im Rechenraster n einfließenden Füllung rlzu(n) und der im Rechenraster 1 aus dem Saugrohr 25 in den betrachteten Zylinder ausströmenden Füllung rlab(n) multipliziert mit eine Konstanten K$_{saug}$ ergibt. Die Konstante K$_{saug}$ ist abhängig vom Volumen des Saugrohrs und der Temperatur im Saugrohr und kann in dem Fachmann bekannter Weise beispielsweise auf einem Prüfstand appliziert oder aus den Geometriegrößen des Saugrohrs gewonnen werden. Das Rechenraster n-1 liegt dabei für den betrachteten Zylinder, genau um ein synchrones Rechenraster früher als das Rechenraster n, liegt also in der dem Rechenraster n zugeordneten Ansaugphase des betrachteten Zylinders direkt vorergehenden Ansaugphase dieses Zylinders. Die Auflösung der Gleichung (4) nach rlab(n) ergibt:

$$rlab(n) = rlzu(n) + \big(ps(n-1) - ps(n)\big)/K_{saug} \tag{5}$$

Dabei ist in Gleichung (5) ps(n-1) und ps(n) jeweils die über das erste vorgegebene Kurbelwinkelintervall gemittelte Messgröße für den Saugrohrdruck. rlzu ist das über Gleichung (3) aus dem gemessenen oder modellierten Luftmassensignal mszu gewonnene Füllungssignal, das einen Mittelwert über das zweite vorgegebene Kurbelwinkelintervall darstellt.

Die Ermittlung des Luftmassenstroms mszu und damit der Füllung rlzu kann insbesondere bei Druckverhältnissen über der Drosselklappe 50 ps/pu < 0,8 mit Hilfe des Nebenlastsignals wie beschrieben, d. h. aus einem Drosselklappenmodell berechnet werden, wobei dann in der beschriebenen Weise die Drosselklappenstellung α, der Saugrohrdruck ps, der Umgebungsdruck pu und die Temperatur T stromauf der Drosselklappe 50 hier entsprechend wie beschrieben berücksichtigt werden.

Die in den betrachteten Zylinder abgesaugte Füllung rlab(n) gemäß Gleichung (5) stellt eine erste charakteristische Größe für die Absaugleistung des betrachteten Zylinders dar. In der Regel ist die so berechnete Größe rlab aber noch nicht die gewünschte Zielgröße. Vielmehr soll in der Regel eine Größe berechnet werden, die die Absaugleistung des betrachteten Zylinders unabhängig vom Saugrohrdruck und optional auch unabhängig von der Temperatur und der Sollstellung der Nockenwelle sein. Daher wird zusätzlich zum Saugrohrmodell gemäß Gleichung (2) auch noch ein Ladungswechselmodell benötigt. Das Ladungswechselmodell beschreibt die in den betrachteten Zylinder abgesaugte Frischluftfüllung rlab in Abhängigkeit des Saugrohrdrucks ps. Wie bereits beschrieben, gibt es auch additive Anteile im Ladungswechselmodell. Diese werden durch den Partialdruck pbrint des Restgases zusammengefasst. Dieser additive Anteil soll jedoch nicht berechnet sondern fest vorgegeben werden. Einzig für jeden Zylinder 5, 10, 15, 20 zu bestimmen ist daher eine multiplikative Größe, d. h. ein Faktor, der die Absaugleistung des entsprechenden Zylinders beschreibt. Die Ladungswechselgleichung des Ladungswechselmodells nach dem Faktor der Umrechnung von Druck in Füllung aufgelöst lautet

$$fupsrl(n) = rlab(n)/[ps(n) - pbr\text{int}(n)] \tag{6}$$

Die in Gleichung (6) aufgeführten Größen stellen dabei jeweils wieder einen Mittelwert über das synchrone Rechenraster n bzw. das entsprechende erste oder zweite Kurbelwinkelintervall dar. Der Faktor fupsrl(n) für die Umrechnung von Druck in Füllung stellt dabei einen zweiten charakteristischen Wert für die Absaugleistung des betrachteten Zylinders dar.

Um eine Unabhängigkeit von der Temperatur T der Ansaugluft zu erhalten, kann der Faktor fupsrl(n) für die Umrechnung von Druck in Füllung selbst wieder auf einen Erwartungswert fupsrlsoll(n) bezogen werden:

$$fupsrl(n) = fupsrlsoll(n) \cdot faktor_{fupsrl} \tag{7}$$

Der saugrohrdruck- und temperaturunabhängige Faktor *faktor_{fupsrl}* aus Gleichung (7) stellt dabei eine dritte charakteristische Größe für die Absaugleistung des betrachteten Zylinders dar. Der in den Gleichungen (5) bis (7) dargestellte Sachverhalt stellt die zentrale Idee der Erfindung dar:

Ein charakteristischer Wert für die zylinderindividuelle Absaugleistung kann aus über das erste vorgegebene Kurbelwinkelintervall gemittelten Werten des aktuellen Saugrohrdrucks und des Saugrohrdrucks im vorherigen synchronen Rechenraster sowie aus einem über das zweite vorgegebene Kurbelwinkelintervall gemittelten Luftmassenstrom in das Saugrohr 25 gewonnen werden, also in Abhängigkeit des in das Saugrohr 25 der Brennkraftmaschine zuströmenden Luftmassenstroms in der aktuellen Ansaugphase und einer Änderung des Saugrohrdrucks in den beiden zuletzt aufeinander folgenden Ansaugphasen des betrachteten Zylinders. Das erfindungsgemäße Verfahren ist in Figur 4 in Form eines Ablaufplans beispielhaft dargestellt. Nach dem Start des Programms erfasst die Motorsteuerung 35 bei einem Programmpunkt 200 während des ersten vorgegebenen Kurbelwinkelintervalls die Abtastwerte des Saugrohrdrucksensors 55 und während des zweiten vorgegebenen Kurbelwinkelintervalls die Abtastwerte des Luftmassenmessers 80. Im Falle der Ermittlung des Luftmassenstroms mszu aus dem Nebenlastsignal ermittelt die Motorsteuerung 35 bei Programmpunkt 200 im zweiten vorgegebenen Kurbelwinkelintervall die entsprechenden Rechenwerte für den Luftmassenstrom mszu in der beschriebenen Weise. Anschließend wird zu einem Programmpunkt 205 verzweigt.

Bei Programmpunkt 205 bildet die Motorsteuerung 35 einen Mittelwert der abgetasteten Werte für den Saugrohrdruck bzw. der gewonnenen Stichproben für den Saugrohrdruck im ersten vorgegebenen Kurbelwinkelintervall. Dieser Mittelwert ist durch die Größe ps(n) gegeben. Ferner ermittelt die Motorsteuerung 35 bei Programmpunkt 205 den Mittelwert der im zweiten vorgegebenen Kurbelwinkelintervall erfassten oder berechneten Werte für den Luftmassenstrom mszu bzw. der in diesem zweiten vorgegebenen Kurbelwinkelintervall gebildeten Stichproben für den Luftmassenstrom mszu, sodass sich mit Hilfe von Gleichung (3) unter Zuhilfenahme des Mittelwerts für die Motordrehzahl nmot im zweiten vorgegebenen Kurbelwinkelintervall und der applizierten Konstanten KUMSRL die Größe rlzu (n) für die dem Saugrohr 25 zugeführte Füllung ergibt. Ferner ermittelt die Motorsteuerung 35 bei Programmpunkt 205 den Wert ps(n-1) aus dem vorherigen Rechenraster ebenfalls als Mittelwert der in der vorherigen Ansaugphase des betrachteten Zylinders gebildeten Saugrohrdrücke im dortigen ersten vorgegebenen Kurbelwinkelintervall in der beschriebenen Weise. Anschließend wird zu einem Programmpunkt 210 verzweigt.

Bei Programmpunkt 210 berechnet die Motorsteuerung 35 gemäß Gleichung (5) die vom betrachteten Zylinder aktuell abgesaugte Füllung rlab(n) als Mittelwert in der beschriebenen Weise. Anschließend liegt der erste charakteristische Wert für die Absaugleistung des betrachteten Zylinders vor, sodass das Programm verlassen werden kann. Optional wird jedoch nach Programmpunkt 210 zu einem Programmpunkt 215 verzweigt.

Bei Programmpunkt 215 wird gemäß Gleichung (6) der Faktor fupsrl(n) für die Umrechnung von Druck in Füllung wiederum in Form eines Mittelwertes berechnet und stellt die zweite charakteristische Größe für die Absaugleistung des betrachteten Zylinders dar. Anschließend kann das Programm verlassen werden. Alternativ kann jedoch von Programmpunkt 215 zu einem Programmpunkt 220 verzweigt werden. Bei Programmpunkt 220 wird gemäß Gleichung (7) der Faktor $faktor_{fulpsrl}$ als Mittelwert und dritte charakteristische Größe für die Absaugleistung des betrachteten Zylinders berechnet. Anschließend wird das Programm verlassen.

Alternativ zur Berechnung der jeweiligen charakteristischen Größe für die Absaugleistung des betrachteten Zylinders mit Hilfe der Gleichungen (5) - (7) kann die charakteristische Größe für die zylinderindividuelle Absaugleistung auch mit Hilfe einer Adaption gelernt werden. In diesem Fall wird das gemäß Figur 3 dargestellte Saugrohr- und Ladungswechselmodell in der Motorsteuerung software- und/oder hardwaremäßig implementiert und bei jedem Ansaugvorgang eines Zylinders in einem synchronen Rechenraster gerechnet. Das Saugrohrmodell und das Ladungswechselmodell entspricht dabei exakt den Gleichungen (5) - (7), einzig unterschiedlich ist die Tatsache, dass bei der Adaption die charakteristische Größe für die zylinderindividuelle Absaugleistung durch Abgleich eines modellierten Saugrohrdrucks mit dem gemessenen Saugrohrdruck adaptiert wird.

In Figur 3 kennzeichnen gleiche Bezugszeichen gleiche Elemente wie in Figur 1. Dabei wird für das Ausführungsbeispiel nach Figur 3 angenommen, dass der Luftmassenstrom mszu vom Luftmassenmesser 80 erfasst wird. Die vom Kurbelwinkelsensor 70 erfassten aktuellen Kurbelwinkelwerte KW werden einem Differenzierglied 85 zugeführt, das den zeitlichen Gradienten der vom Kurbelwinkelsensor 70 erfassten Kurbelwinkel ermittelt und als Motordrehzahl nmot einem ersten Multiplikationsglied 100 zuführt, dem außerdem von einem Faktorwertspeicher 95 der Faktor KUMSRL zugeführt ist. Das am Ausgang des ersten Multiplikationsglieds 100 anliegende Produkt nmot * KUMSRL wird einem Divisionsglied 105 als Divisor zugeführt, dem außerdem vom Luftmassenmesser 80 als Dividend der gemessene Luftmassenstrom mszu zugeführt wird. Am Ausgang des Divisionsglieds 105 liegt somit der Quotient rlzu = mszu/(nmot * KUMSRL) gemäß Gleichung (3) an. Von diesem Quotienten wird in einem ersten Subtraktionsglied 110 die in den betrachteten Zylinder abfließende Füllung rlab subtrahiert, die von einem Ladungswechselmodell 30 gebildet wird. Somit liegt am Ausgang des ersten Subtraktionsglieds 110 die Differenz rlzu - rlab an. Diese wird als Eingangsgröße einem ersten Integrator 130 zugeführt, der das Saugrohrmodell darstellt. Somit ergibt sich am Ausgang des ersten Integrators 130 ein modellierter Wert für den Saugrohrdruck psmod. Vom modellierten Wert psmod des Saugrohrdrucks wird anschließend in einem zweiten Subtraktionsglied 115 der vom Saugrohrdrucksensor 55 gemessene Saugrohrdruck ps subtrahiert. Die sich bildende Differenz psmod - ps ist über einen ersten gesteuerten Schalter 140 je nach Schalterstellung entweder einem zweiten Integrator 150, einem dritten Integrator 155, einem vierten Integrator 160 oder einem fünften Integrator 165 zuführbar. Dabei ist der zweite Integrator 150 dem ersten Zylinder 5, der dritte Integrator 155 dem zweiten Zylinder 10, der vierte Integrator 160 dem dritten Zylinder 15 und der fünfte Integrator 165 dem vierten Zylinder 20 zugeordnet. Das Ausgangssignal des Kurbelwinkelsensors 70 ist außerdem einer Auswerteeinheit 135 der Motorsteuerung 35 zugeführt, die in der Ansaugphase des ersten Zylinders 5 den ersten gesteuerten Schalter 140 zur Verbindung des Ausgangs des ersten Subtraktionsglieds 115 mit dem zweiten Integrator 150, während der Ansaugphase des zweiten Zylinders 10 zur Verbindung des Ausgangs des ersten Subtraktionsglieds 115 mit dem dritten Integrator 155, während der Ansaugphase des dritten Zylinders 15 zur Verbindung des Ausgangs des zweiten Subtraktionsglieds 115 mit dem vierten Integrator 160 und während der Ansaugphase des vierten Zylinders 20 zur Verbindung des Ausgangs des zweiten Subtraktionsglieds 115 5 mit dem fünften Integrator 165 ansteuert. Über einen zweiten gesteuerten Schalter 160, der synchron zum ersten gesteuerten Schalter 140 von der Auswerteeinheit 135 geschaltet wird, sind die Ausgänge der Integratoren 150, 155, 160, 165 wahlweise mit einem zweiten Multiplikationsglied 125 des Ladungswechselmodells 30 verbindbar. Dabei wird der Ausgang des zweiten Integrators 150 mit dem zweiten Multiplikationsglied 125 während der Ansaugphase des ersten Zylinders 5, der Ausgang des dritten Integrators 155 mit dem zweiten Multiplikationsglied 125 während der Ansaugphase des zweiten Zylinders 10, der Ausgang des vierten Integrators 160 mit dem zweiten Multiplikationsglied 125 während der Ansaugphase des dritten Zylinders 15 und der Ausgang des fünften Integrators 165 mit dem zweiten Multiplikationsglied 125 in der Ansaugphase des vierten Zylinders 20 verbunden. Der Ausgang der Integratoren 150, 155, 160, 165 stellt dabei den Faktor fupsrl für die Umrechnung von Druck in Füllung dar. Er wird von den Integratoren 150, 155, 160, 165 im Sinne einer Minimierung der Differenz psmod - ps adaptiert. Vom modellierten Saugrohrdruck psmod am Ausgang des ersten Integrators 130 wird in einem dritten Subtraktionsglied 120 der Partialdruck pbrint des Restgases aus einem Restgaswertspeicher 90 subtrahiert. Die sich bildende Differenz psmod - pbrint am Ausgang des dritten Subtraktionsglieds 120 wird dem zweiten Multiplikationsglied 125 zugeführt und dort mit dem Faktor fupsrl für die Umrechnung von Druck in Füllung multipliziert, sodass sich am Ausgang des zweiten Multiplikationsglied 125 die Füllung rlab, die in den betrachteten Zylinder abgesaugt wird, ergibt und die wie beschrieben dem ersten Subtraktionsglied 110 zugeführt wird. Das dritte Subtraktionsglied 120 und das zweite Multiplikationsglied 125 bilden dabei das Ladungswechselmodell 30. Die Integratoren 150, 155, 160, 165 bilden eine Ermittlungseinheit 40 zur Ermittlung eines charakteristischen Werts für die Absaugleistung der einzelnen Zylinder, also eine zylinderindividuelle Absaugleistung in Form des Faktor fupsrl für die Umrechnung von Druck in Füllung. Mit der Adaption des Faktors fupsrl für die Umrechnung von Druck in Füllung wird auch der Wert rlab für die in dem betrachteten Zylinder abgesaugte Füllung adaptiert als erster charakteristischer Wert für die Absaugleistung. Der Restgaswertspeicher 90 und der Faktorwertspeicher 95 sowie das Differenzierglied 85 sind gemäß Figur 3 außerhalb der Motorsteuerung 35 angeordnet, können optional und unabhängig von einander auch in der Motorsteuerung 35 implementiert sein.

Gemäß einer Weiterbildung der Erfindung ist es optional vorgesehen, dass der sich für die verwendete erste, zweite oder dritte charakteristische Größe für die Absaugleistung eines Zylinders ergebende Wert mit einem Sollwert verglichen wird und dass in Abhängigkeit eines Vergleichsergebnisses die Funktion der Absaugung des betrachteten Zylinders diagnostiziert wird. Dies kann bei einem auf den Programmpunkt 220 folgenden Programmpunkt 225 gemäß Figur 4 erfolgen, wobei der Programmpunkt 225 gestrichelt dargestellt ist. Dabei kann der Sollwert beispielsweise auf einem Prüfstand appliziert werden. Stimmt der sich für die verwendete charakteristische Größe ergebende Wert bei Programmpunkt 225 mit dem Sollwert innerhalb eines vorgegebenen, beispielsweise ebenfalls auf einem Prüfstand applizierten Toleranzbereichs überein, so wird eine fehlerfreie Funktion der Absaugung des betrachteten Zylinders diagnostiziert, andernfalls wird ein Fehler bei der Absaugung des betrachteten Zylinders diagnostiziert und eine optische und/ oder akustische Warnmeldung, gegebenenfalls ein Notlauf der Brennkraftmaschine oder in letzter Konsequenz ein Abstellen der Brennkraftmaschine eingeleitet. Gemäß einer weiteren optionalen Ausführungsform der Erfindung kann mit Hilfe der ermittelten verwendeten charakteristischen Größe für die Absaugleistung des betrachteten Zylinders auch eine zylinderindividuelle Füllungsregelung durchgeführt werden, bei der die in der beschriebenen Weise ermittelte verwendete charakteristische Größe für die Absaugleistung des betrachteten Zylinders einem vorgegebenen Sollwert nachgeführt wird. Der Sollwert kann in diesem Fall beispielsweise abhängig von einem Fahrerwunsch oder einer Anforderung eines externen Steuersystems, wie beispielsweise einer Antriebsschlupfregelung, eines Antiblockiersystems, einer Fahrdynamikregelung, einer Fahrgeschwindigkeitsregelung oder dergleichen ermittelt oder beispielsweise auf einem Prüfstand als Festwert appliziert werden. Die zylinderindividuelle Füllungsregelung kann dann beispielsweise durch individuelle Ansteuerung mindestens eines Gaswechselventils des betrachteten Zylinders erfolgen, beispielsweise eines oder mehrerer Einlassventile und eines oder mehrerer Auslassventile des betrachteten Zylinders. Dies ist insbesondere im Falle einer vollvariablen Ventilsteuerung möglich, bei der auf diese Weise zylinderindividuelle Schwankungen der Absaugleistung detektiert und ausgeregelt werden können oder bewusst auf zylinderindividuelle Sollfüllungen in der beschriebenen Weise geregelt werden kann. Ein entsprechender Regelschritt für die aktuelle Ansaugphase des betrachteten Zylinders wird dabei bei Programmpunkt 225 gemäß Figur 4 durchgeführt. Das Programm nach Figur 4 wird für jede Ansaugphase des gerade betrachteten Zylinders durchlaufen. Nach Programmpunkt 225 wird das Programm verlassen.

Gemäß einer weiteren optionalen Ausführungsform ist es vorgesehen, dass die ermittelte verwendete charakteristische Größe für die Absaugleistung für mehrere Zylinder ermittelt wird und dass sich für die charakteristische Größe für die Absaugleistung ergebendc Werte mehrerer Zylinder miteinander verglichen werden und dass in Abhängigkeit des Vergleichsergebnisses die Funktion der Absaugung der Zylinder diagnostiziert wird. Auf diese Weise lässt sich eine Diagnose von unerwünschten zylinderindividuellen Unterschiede zwischen den Absaugleistungen einzelner Zylinder diagnostizieren. Eine typische Anwendung dabei ist die Diagnose von Ventiltrieben zur Zylinderabschaltung. Fälschlicherweise abgeschaltete oder fälschlicherweise aktive Zylinder werden sofort erkannt. Ferner kann dabei eine eindeutige Zylinderzuordnung aufgrund der wie beschrieben gewählten ersten und zweiten Kurbelwinkelintervalle erfolgen. Weitere Anwendungen sind bei Ventiltrieben mit Hubumschaltung denkbar. Die unterschiedliehen Absaugleistungen im Falle der Verwendung unterschiedlicher Hubkurven bei verschiedenen Zylindern können erkannt werden und mit ihren Sollwerten zu DiagnoseZwecken verglichen werden. Aber auch Ventilsteuersysteme mit Phasensteuerung, wo es aufgrund der Konstruktion zu zylinderindividuellen Unterschieden kommen kann, können auf diese Weise diagnostiziert werden. Insbesondere lassen sich Unterschiede in der Absaugleistung verschiedener Zylinder bei elektromagnetischen oder elektrohydraulischen vollvariablen Ventilsteuerungen in der beschriebenen Weise diagnostizieren.

Im Falle des beschriebenen Vergleichs der charakteristischen Werte für die Absaugleistungen mehrerer Zylinder können Unterschiede in den Absaugleistungen einzelner Zylinder auch dadurch behoben werden, dass die charakteristischen Werte für die Absaugleistungen der einzelnen Zylinder auf einen gemeinsamen Sollwert geregelt werden, um somit eine Gleichstellung dieser Zylinder im Hinblick auf die charakteristische Größe für die Absaugleistung zu erreichen.

Die Diagnose eines Fehlers in der zylinderindividuellen Absaugleistung eines Zylinders kann beispielsweise dadurch bedingt sein, dass die Kolbenringe nicht mehr ausreichend dicht sind, sodass sich die Füllung des betrachteten Zylinders bei kleinen Lasten und Motordrehzahlen verringert, dadurch dass Gas aus dem Kurbelgehäuse die Frischlufteinströmung über das Saugrohr 25 beeinträchtigt. In diesem Fall kann durch die zylinderindividuelle Diagnose der Absaugleistung eine Kompressionsdiagnose realisiert werden, bei der die Kolbenringe auf ausreichende Dichtheit überprüft werden

Die beschriebenen Diagnosen können beispielsweise am Bandende nach Herstellung der Brennkraftmaschine bzw. des Fahrzeugs oder bei einem Werkstattaufenthalt oder auch im laufenden Betrieb der Brennkraftmaschine durchgeführt werden. Dabei können insbesondere am Bandende alle möglichen Variationen von Ventilerhebungskurven in ihrer Auswirkung auf die Füllung der einzelnen Zylinder in der beschriebenen Weise zu Diagnosezwecken überprüft werden.

## Patentansprüche

1. Verfahren zum Betreiben einer Brennkraftmaschine (1), wobei eine charakteristische Größe für eine Absaugleistung eines Zylinders (5, 10, 15, 20) der Brennkraftmaschine (1) ermittelt wird, wobei die charakteristische Größe für die Absaugleistung in Abhängigkeit des in ein Saugrohr (25) der Brennkraftmaschine (1) zuströmenden Massenstroms und einer Änderung des Saugrohrdruckes während einer Ansaugphase des Zylinders (5, 10, 15, 20) ermittelt wird, wobei eine zweite charakteristische Größe unabhängig vom Saugrohrdruck ermittelt wird, **dadurch gekennzeichnet, dass** ein sich für die charakteristische Größe ergebender Wert mit einem Sollwert verglichen wird und in Abhängigkeit des Vergleichsergebnisses die Funktion der Absaugung des Zylinders (5, 10, 15, 20) diagnostiziert wird oder dass die charakteristische Größe für die Absaugleistung dem Sollwert nachgeführt wird, nämlich durch Ansteuerung mindestens eines Gaswechselventils des Zylinders (5, 10, 15, 20).

2. Verfahren nach Anspruch 1, **dadurch gekennzeichnet, dass** der Saugrohrdruck durch Abtastung mit einer ersten vorgegebenen Abtastrate in einem ersten in seiner Länge und Lage vorgegebenen Zeit-.oder Kurbelwinkelintervall ermittelt wird.

3. Verfahren nach Anspruch 2, **dadurch gekennzeichnet, dass** mehrere Werte für den Saugrohrdruck des ersten vorgegebenen Zeit- oder Kurbelwinkelintervalls, insbesondere gewichtet, gemittelt werden.

4. Verfahren nach einem der vorherigen Ansprüche, **dadurch gekennzeichnet, dass** der in das Saugrohr (25) zuströmende Massenstrom, vorzugsweise durch Abtastung mit einer zweiten vorgegebenen Abtastrate, in einem zweiten in seiner Länge und Lage vorgegebenen Zeit- oder Kurbelwinkelintervall ermittelt wird.

5. Verfahren nach einem der Ansprüche 1 bis 3, **dadurch gekennzeichnet, dass** der in das Saugrohr (25) zuströmende Massenstrom in einem vorgegebenen Rechenraster in einem zweiten in seiner Länge und Lage vorgegebenen Zeit- oder Kurbelwinkelintervall aus Betriebskenngrößen der Brennkraftmaschine (1) modelliert bzw. berechnet wird.

6. Verfahren nach Anspruch 4 oder 5, **dadurch gekennzeichnet, dass** mehrere Werte für den Massenstrom des zweiten vorgegebenen Zeit- oder Kurbelwinkelintervalls, insbesondere gewichtet, gemittelt werden.

7. Verfahren nach einem der Ansprüche 4 bis 6, soweit diese auf Anspruch 2 oder 3 rückbezogen sind, **dadurch gekennzeichnet, dass** das zweite Zeit- oder Kurbelwinkelintervall um einen vorgegebenen Zeit- oder Kurbelwinkelabstand gegenüber dem ersten Zeit- oder Kürbelwinkelintervall, vorzugsweise um einen halben Zündabstand zweier direkt aufeinander folgend gezündeter Zylinder (5, 10, 15, 20) der Brennkraftmaschine (1), versetzt angeordnet wird, insbesondere zeitlich zumindest teilweise vor dem ersten Zeit- oder Kurbelwinkelintervall.

8. Verfahren nach einem der vorherigen Ansprüche, **dadurch gekennzeichnet, dass** die charakteristische Größe für mehrere Zylinder (5, 10, 15, 20) ermittelt wird und dass sich für die charakteristische Größe ergebende Werte mehrerer Zylinder (5, 10, 15, 20) miteinander verglichen werden und dass in Abhängigkeit des Vergleichsergebnisses die Funktion der Absaugung der Zylinder (5, 10, 15, 20) diagnostiziert wird.

9. Verfahren nach einem der vorherigen Ansprüche, soweit diese auf die Ansprüche 2 und 4 oder 2 und 5 rückbezogen sind, **dadurch gekennzeichnet, dass** als eine erste charakteristische Größe für die Absaugleistung eine in den Zylinder (5, 10, 15, 20) abfließende Füllung gewählt wird, die als Summe einer in das Saugrohr (25) zufließenden Füllung des letzten zweiten vorgegebenen Zeit- oder Kurbelwinkelintervalls und dem Quotienten aus der Differenz der Saugrohrdrücke der letzten beiden ersten vorgegebenen Zeit- oder Kurbelwinkelintervalle und einer Konstanten ermittelt wird.

10. Verfahren nach Anspruch 9, **dadurch gekennzeichnet, dass** eine zweite charakteristische Größe für die Absaugleistung als Quotient aus der ersten charakteristischen Größe und einer Differenz aus dem Saugrohrdruck und einem vom Restgas im Zylinder (5, 10, 15, 20) abhängigen Partialdruck des letzten ersten Zeit- oder Kurbelwinkelintervalls ermittelt wird.

11. Verfahren nach Anspruch 10, **dadurch gekennzeichnet, dass** eine dritte charakteristische Größe für die Absaugleistung als Quotient aus der zweiten charakteristischen Größe und einem Erwartungswert gebildet wird.

12. Verfahren nach einem der vorherigen Ansprüche, **dadurch gekennzeichnet, dass** der Saugrohrdruck durch Integration der Differenz aus einer in das Saugrohr (25) zufließenden Füllung und einer in den Zylinder (5, 10, 15, 20) abfließenden Füllung modelliert wird, dass der so modellierte Saugrohrdruck mit einem gemessenen Saugrohrdruck verglichen wird und dass die verwendete charakteristische Größe für die Absaugleistung mit Hilfe eines Ladungswechselmodells (30) zur Bestimmung der in den Zylinder (5, 10, 15, 20) abfließenden Füllung in Abhängigkeit des modellierten Saugrohrdrucks so gewählt wird, dass der modellierte Saugrohrdruck dem gemessenen Saugrohrdruck angeglichen wird.

13. Vorrichtung (35) zum Betreiben einer Brennkraftmaschine (1), mit einer Ermittlungseinheit (40) zum Ermitteln einer charakteristischen Größe für eine Absaugleistung eines Zylinders (5, 10, 15, 20) der Brennkraftmaschine (1), wobei die Ermittlungseinheit (40) die charakteristische Größe für die Absaugleistung in Abhängigkeit eines in das Saugrohr (25) der Brennkraftmaschine (1) zuströmenden Massenstroms und der Änderung eines Saugrohrdruckes während einer Ansaugphase des Zylinders (5, 10, 15, 20) ermittelt), wobei die Ermittlungseinheit (40) charakteristische Größe unabhängig vom Saugrohrdruck ermittelt, dadurch eine zweite gekennzeichnet, dass die Vorrichtung derart ausgebildet ist, dass sie einen sich für die charakteristische Größe ergebenden Wert mit einem Sollwert vergleicht und sie in Abhängigkeit des Vergleichsergebnisses die Funktion der Absaugung des Zylinders (5, 10, 15, 20) diagnostiziert oder dass die charakteristische Größe für die Absaugleistung dem Sollwert nachrührt, nämlich durch Ansteuerung mindestens eines Gaswechselventils des Zylinders (5, 10, 15, 20).

## Claims

1. Method for operating an internal combustion engine (1), a characteristic variable for a suction power of a cylinder (5, 10, 15, 20) of the internal combustion engine (1) being determined, the characteristic variable for the suction power being determined as a function of the mass flow which flows into an intake manifold (25) of the internal combustion engine (1) and of a change in the intake-manifold pressure during an intake phase of the cylinder (5, 10, 15, 20), a second characteristic variable being determined independently of the intake-manifold pressure, **characterized in that** a value which results for the characteristic variable is compared with a setpoint value and the function of the suction of the cylinder (5, 10, 15, 20) is diagnosed as a function of the result of the comparison, or **in that** the characteristic variable for the suction power is updated with respect to the setpoint value, namely by actuation of at least one gas exchange valve of the cylinder (5, 10, 15, 20).

2. Method according to Claim 1, **characterized in that** the intake-manifold pressure is determined by sensing at a first predefined sensing rate at a first time or crank-angle interval which has its length and position predefined.

3. Method according to Claim 2, **characterized in that** a plurality of values for the intake-manifold pressure of the first predefined time or crank-angle interval are averaged, in particular in a weighted manner.

4. Method according to one of the preceding claims, **characterized in that** the mass flow which flows into the intake manifold (25) is determined, preferably by sensing at a second predefined sensing rate, at a second time or crank-angle interval which has its length and position predefined.

5. Method according to one of Claims 1 to 3, **characterized in that** the mass flow which flows into the intake manifold (25) is modelled or calculated from operating characteristic variables of the internal combustion engine (1) in a predefined computation grid at a second time or crank-angle interval which has its length and position predefined.

6. Method according to Claim 4 or 5, **characterized in that** a plurality of values for the mass flow of the second predefined time or crank-angle interval are averaged, in particular in a weighted manner.

7. Method according to one of Claims 4 to 6, if referring back to Claim 2 or 3, **characterized in that** the second time or crank-angle interval is arranged offset by a predefined time or crank-angle spacing with respect to the first time or crank-angle interval, preferably by half an ignition spacing of two cylinders (5, 10, 15, 20) of the internal combustion engine (1) which are ignited directly following one another, in particular temporally at least partially before the first time or crank-angle interval.

8. Method according to one of the preceding claims, **characterized in that** the characteristic variable is determined for a plurality of cylinders (5, 10, 15, 20), and **in that** values which result for the characteristic variable of a plurality of cylinders (5, 10, 15, 20) are compared with one another, and **in that** the function of the suction of the cylinders (5, 10, 15, 20) is diagnosed as a function of the result of the comparison.

9. Method according to one of the preceding claims, if referring back to Claims 2 and 4 or 2 and 5, **characterized in that** a filling which flows out into the cylinder (5, 10, 15, 20) is selected as a first characteristic variable for the suction power, which filling is determined as the sum of a filling, flowing into the intake manifold (25), of the last second predefined time or crank-angle interval and the quotient from the difference of the intake-manifold pressures of the last two first predefined time or crank-angle intervals and a constant.

10. Method according to Claim 9, **characterized in that** a second characteristic variable for the suction power is determined as a quotient from the first characteristic variable and a difference of the intake-manifold pressure and a partial pressure, depending on the residual gas in the cylinder (5, 10, 15, 20), of the last first time or crank-angle interval.

11. Method according to Claim 10, **characterized in that** a third characteristic variable for the suction power is formed as a quotient from the second characteristic variable and an expected value.

12. Method according to one of the preceding claims, **characterized in that** the intake-manifold pressure is modelled by integration of the difference of a filling which flows into the intake manifold (25) and a filling which flows out into the cylinder (5, 10, 15, 20), **in that** the intake-manifold pressure which is modelled in this way is compared with a measured intake-manifold pressure, and **in that** the characteristic variable which is used for the suction power is selected with the aid of a charge exchange model (30) for determining the filling which flows out into the cylinder (5, 10, 15, 20) as a function of the modelled intake-manifold pressure, in such a way that the modelled intake-manifold pressure is adapted to the measured intake-manifold pressure.

13. Apparatus (35) for operating an internal combustion engine (1), having a determining unit (40) for determining a characteristic variable for a suction power of a cylinder (5, 10, 15, 20) of the internal combustion engine (1), the determining unit (40) determining the characteristic variable for the suction power as a function of a mass flow which flows into the intake manifold (25) of the internal combustion engine (1) and of the change in an intake-manifold pressure during an intake phase of the cylinder (5, 10, 15, 20), the determining unit (40) determining a second characteristic variable independently of the intake-manifold pressure, **characterized in that** the apparatus is configured in such a way that it compares a value which results for the characteristic variable with a setpoint value and it diagnoses the function of the suction of the cylinder (5, 10, 15, 20) as a function of the result of the comparison, or that it updates the characteristic variable for the suction power with respect to the setpoint value, namely by actuation of at least one gas exchange valve of the cylinder (5, 10, 15, 20).

**Revendications**

1. Procédé pour faire fonctionner un moteur à combustion interne (1), une grandeur caractéristique pour une puissance d'admission d'un cylindre (5, 10, 15, 20) du moteur à combustion interne (1) étant déterminée, la grandeur caractéristique pour la puissance d'admission étant déterminée en fonction du flux massique affluant dans un tube d'admission (25) du moteur à combustion interne (1) et d'une variation de la pression dans le tube d'admission au cours d'une phase d'admission du cylindre (5, 10, 15, 20), une deuxième grandeur caractéristique étant déterminée indépendamment de la pression dans le tube d'admission, **caractérisé en ce qu'**une valeur obtenue pour la grandeur caractéristique est comparée avec une valeur de consigne et en fonction du résultat de la comparaison, le fonctionnement de l'admission du cylindre (5, 10, 15, 20) est diagnostiqué ou **en ce que** la grandeur caractéristique pour la puissance d'admission est asservie à la valeur de consigne, et ce par la commande d'au moins une soupape d'échange de gaz du cylindre (5, 10, 15, 20).

2. Procédé selon la revendication 1, **caractérisé en ce que** la pression dans le tube d'admission est déterminée par balayage à une première vitesse de balayage prédéfinie dans un premier intervalle de temps ou d'angle de vilebrequin prédéfini en longueur et en position.

3. Procédé selon la revendication 2, **caractérisé en ce que** plusieurs valeurs pour la pression dans le tube d'admission dans le premier intervalle de temps ou d'angle de vilebrequin prédéfini sont moyennées, notamment de manière pondérée.

4. Procédé selon l'une quelconque des revendications précédentes, **caractérisé en ce que** le flux massique affluant dans le tube d'admission (25) est déterminé, de préférence par balayage à une deuxième vitesse de balayage prédéfinie, dans un deuxième intervalle de temps ou d'angle de vilebrequin prédéfini en longueur et en position.

5. Procédé selon l'une quelconque des revendications 1 à 3, **caractérisé en ce que** le flux massique affluant dans le tube d'admission (25) est modélisé ou calculé dans une grille de calcul prédéfinie dans un deuxième intervalle de temps ou d'angle de vilebrequin prédéfini en longueur et en position, à partir de grandeurs caractéristiques de fonctionnement du moteur à combustion interne (1).

6. Procédé selon la revendication 4 ou 5, **caractérisé en ce que** plusieurs valeurs pour le flux massique du deuxième intervalle de temps ou d'angle de vilebrequin prédéfini sont moyennées, notamment de manière pondérée.

7. Procédé selon l'une quelconque des revendications 4 à 6, dans la mesure où elles se rapportent à la revendication 2 ou 3, **caractérisé en ce que** le deuxième intervalle de temps ou d'angle de vilebrequin prédéfini est disposé de manière décalée d'une distance prédéfinie temporelle ou d'angle de vilebrequin par rapport au premier intervalle de temps ou d'angle de vilebrequin, de préférence d'une demi-distance d'allumage de deux cylindres (5, 10, 15, 20) allumés successivement du moteur à combustion interne (1), notamment au moins en partie temporellement avant le premier intervalle de temps ou d'angle de vilebrequin.

8. Procédé selon l'une quelconque des revendications précédentes, **caractérisé en ce que** la grandeur caractéristique est déterminée pour plusieurs cylindres (5, 10, 15, 20) et **en ce que** plusieurs cylindres (5, 10, 15, 20) sont comparés les uns aux autres pour des valeurs résultant de la grandeur caractéristique, et **en ce qu'**en fonction du résultat de la comparaison, le fonctionnement de l'admission des cylindres (5, 10, 15, 20) est diagnostiqué.

9. Procédé selon l'une quelconque des revendications précédentes, dans la mesure où elles se rapportent aux revendications 2 et 4 ou 2 et 5, **caractérisé en ce que** l'on sélectionne en tant que première grandeur caractéristique pour la puissance d'admission un remplissage s'écoulant dans le cylindre (5, 10, 15, 20), qui est déterminé en tant que somme d'un remplissage affluant dans le tube d'admission (25) du dernier deuxième intervalle de temps ou d'angle de vilebrequin prédéfini et du quotient de la différence des pressions dans le tube d'admission des deux derniers premiers intervalles de temps ou d'angle de vilebrequin prédéfinis et d'une constante.

10. Procédé selon la revendication 9, **caractérisé en ce qu'**une deuxième grandeur caractéristique pour la puissance d'admission est déterminée en tant que quotient de la première grandeur caractéristique et d'une différence entre la pression dans le tube d'admission et une pression partielle dépendant du gaz résiduel dans le cylindre (5, 10, 15, 20) du dernier premier intervalle de temps ou d'angle de vilebrequin.

11. Procédé selon la revendication 10, **caractérisé en ce qu'**une troisième grandeur caractéristique pour la puissance d'admission est formée à partir du quotient de la deuxième grandeur caractéristique et d'une valeur attendue.

12. Procédé selon l'une quelconque des revendications précédentes, **caractérisé en ce que** la pression dans le tube d'admission est modélisée par intégration de la différence entre un remplissage affluant dans le tube d'admission (25) et un remplissage s'écoulant dans le cylindre (5, 10, 15, 20), **en ce que** la pression dans le tube d'admission ainsi modélisée est comparée à une pression mesurée dans le tube d'admission et **en ce que** la grandeur caractéristique utilisée pour la puissance d'admission est sélectionnée à l'aide d'un modèle de changement de charge (30) pour déterminer le remplissage s'écoulant dans le cylindre (5, 10, 15, 20) en fonction de la pression modélisée dans le tube d'admission, de telle sorte que la pression modélisée dans le tube d'admission soit ajustée à la pression mesurée dans le tube d'admission.

13. Dispositif (35) pour faire fonctionner un moteur à combustion interne (1), comprenant une unité de détermination (40) pour déterminer une grandeur caractéristique pour une puissance d'admission d'un cylindre (5, 10, 15, 20) du moteur à combustion interne (1), l'unité de détermination (40) déterminant la grandeur caractéristique pour la puissance d'admission en fonction d'un flux massique affluant dans le tube d'admission (25) du moteur à combustion interne (1) et de la variation d'une pression dans le tube d'admission au cours d'une phase d'admission du cylindre (5, 10, 15, 20), l'unité de détermination (40) déterminant une deuxième grandeur caractéristique indépendamment de la pression dans le tube d'admission, **caractérisé en ce que** le dispositif est réalisé de telle sorte qu'il compare une valeur obtenue pour la grandeur caractéristique avec une valeur de consigne et qu'il diagnostique en fonction du résultat de la comparaison le fonctionnement de l'admission du cylindre (5, 10, 15, 20) ou **en ce que** la grandeur caractéristique pour la puissance d'admission est asservie à la valeur de consigne, et ce par commande d'au moins une soupape d'échange de gaz du cylindre (5, 10, 15, 20).

Fig. 1

EP 1 934 453 B1

Fig. 2

Fig. 3

**Fig. 4**

```
           ┌──────────────────┐
           │      START       │
           └──────────────────┘
                    │
                    ▼
           ┌──────────────────┐
           │                  │── 200
           └──────────────────┘
                    │
                    ▼
           ┌──────────────────┐
           │                  │── 205
           └──────────────────┘
                    │
                    ▼
           ┌──────────────────┐
           │                  │── 210
           └──────────────────┘
                    │
                    ▼
           ┌──────────────────┐
           │                  │── 215
           └──────────────────┘
                    │
                    ▼
           ┌──────────────────┐
           │                  │── 220
           └──────────────────┘
                    │
                    ▼
           ┌──────────────────┐
           │                  │── 225
           └──────────────────┘
                    │
                    ▼
           ┌──────────────────┐
           │       END        │
           └──────────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10064651 A1
- EP 1247967 A2
- EP 1643101 A1
- EP 0399829 A2